# FASCICULE DE BREVET EUROPEEN

(11) **EP 1 168 831 B1**
(45) Date de publication et mention de la délivrance du brevet: **29.08.2007**
(21) Numéro de dépôt: 01401602.6
(22) Date de dépôt: 18.06.2001
(51) Int. Cl.: H04N 5/232

(54) **Procédé de calibration de caméra**
Kamerakalibrierungsverfahren
Method for camera calibration

(30) Priorité: 23.06.2000 FR 0008076
(43) Date de publication de la demande: 02.01.2002
(73) Titulaire: Leo Vision, 92170 Vanves (FR)
(72) Inventeur: Landelle, David, 78390 Bois d'Arcy (FR); Gafsou, Olivier, 51100 Reims (FR); Bejanin, Mathias, 75016 Paris (FR)
(74) Mandataire: Loisel, Bertrand

(56) Documents cités:
- US-A- 5 479 597
- US-A- 5 949 433
- US-A- 5 990 935
- ZHENG W ET AL: "A high-precision camera operation parameter measurement system and its application to image motion inferring" PROCEEDINGS 1999 INTERNATIONAL CONFERENCE ON IMAGE PROCESSING (CAT. 99CH36348), PROCEEDINGS OF 6TH INTERNATIONAL CONFERENCE ON IMAGE PROCESSING (ICIP'99), KOBE, JAPAN, 24-28 OCT. 1999, pages 695-699 vol.3, XP002164659 1999, Piscataway, NJ, USA, IEEE, USA ISBN: 0-7803-5467-2
- HANQI ZHUANG ET AL: "Camera calibration with a near-parallel (ill-conditioned) calibration board configuration" IEEE TRANSACTIONS ON ROBOTICS AND AUTOMATION, DEC. 1996, IEEE, USA, vol. 12, no. 6, pages 918-921, XP002161529 ISSN: 1042-296X

## Description

L'invention concerne les optiques pour caméra ayant des caractéristiques optiques (zoom et mise au point) réglables pendant l'utilisation et destinées à être montées sur une caméra-dite «appareillée» ayant elle-même des capteurs fournissant des signaux représentatifs de l'orientation de la caméra par rapport à un pied. Elle trouve une application particulièrement importante, bien que non exclusive, dans les optiques destinées à être utilisées sur des caméras incorporées à des installations capable de remplacer, dans l'image fournie par la caméra, une zone cible, occupant une position fixe dans l'espace vu par la caméra, par un modèle mémorisé, figé ou animé, après mise à l'échelle de ce modèle. La position et la surface de la zone fixe sont mémorisées dans l'installation qui comporte des moyens de calcul et de synthèse d'image capables de calculer la déformation ou « warping » à faire subir au modèle et de l'incruster.

Les capteurs utilisés sont en général des codeurs numériques qui ont l'intérêt d'être sans dérive et d'avoir une sortie directement utilisable par un appareil de traitement de données.

Il existe déjà des installations du type ci-dessus. Leur mise en oeuvre exige, pour obtenir une précision satisfaisante, une phase préalable longue et pénible de calibrage sur le site, au cours de laquelle un cadreur vise successivement différentes parties de tout l'espace susceptible d'être balayé, avec différents degrés de zoom et plusieurs mises au point et les différents capteurs sont calibrés à partir des visées en prenant comme référence des points caractéristiques fixes, proches et lointains, de la scène observée. Un exemple de ces methodes est décrit dans le traité " A high-precision camera operation parameter measurement system and its application to image motion inferring" per W. Zheng et al. Ces méthodes limitent le domaine de fonctionnement.

Les inventeurs ont pris conscience du fait que certaines des caractéristiques et des fonctions de transfert à identifier sont intrinsèques à l'optique elle-même alors que d'autres dépendent de l'interface entre l'optique et la caméra et peuvent être qualifiés d'extrinsèques. En particulier le même objectif ne se trouve pas strictement dans la même position par rapport au plan focal de la caméra, occupé par la matrice de sites photosensibles, du fait des tolérances inévitables (usure), des conditions de montage et des standards d'image.

L'invention vise, à partir de ces constatations, à simplifier considérablement les opérations à effectuer sur site à chaque utilisation sur une nouvelle caméra ou à un nouvel emplacement.

Pour cela l'invention propose notamment un procédé de calibration ou calibrage suivant lequel :
- On effectue, une fois pour toutes, une calibration fournissant les caractéristiques intrinsèques de l'optique et on constitue un fichier informatique contenant ces caractéristiques, et
- sur site, on effectue une calibration de l'ensemble caméra - optique permettant de définir les fonctions de transfert entre signaux provenant des capteurs d'orientation de la caméra et des capteurs de l'optique et les caractéristiques réelles à partir des signaux obtenus par visée de points caractéristiques de la scène à observer et du dit fichier.

Suivant un autre aspect, il est proposé un procédé de calibrage permettant de déterminer une table de correspondance entre d'une part au moins des signaux de sortie de capteurs de zoom Z et de mise au point F placés sur un objectif de caméra et constitués par des codeurs numériques et d'autre part des valeurs réelles de focale et de déformations géométriques, comprenant :
(a) une étape, effectuée une fois pour toutes, de détermination de caractéristiques intrinsèques de l'objectif
(b) une étape sur site après montage de l'objectif sur une caméra destinée à une exploitation, au cours de laquelle on effectue le recalage d'origines

On simplifie ainsi énormément les opérations sur site puisqu'elles se réduisent à quelques visées, pouvant être effectuées en quelques minutes par un opérateur formé mais non spécialiste, toutes les caractéristiques intrinsèques de l'optique étant déjà disponibles. On sélectionne simplement le fichier de calibration de l'objectif, on donne les constantes du système (type de tête de caméra, position de la caméra sur la tête) et on effectue les visées nécessaires. De plus cette méthode permet une grande précision car la calibration intrinsèque a été faite en dehors des contraintes opérationnelles .

L'invention propose également un ensemble utilisable en vue de la mise en oeuvre d'un objectif de caméra , constituant la dite optique, l'ensemble comprenant l'objectif lui-même et un fichier (fichier ROM, mémoire flash, disque) qui l'accompagne et est chargeable dans un calculateur utilisé lors de la partie sur site du calibrage.

Elle propose également un logiciel exécutable sur un calculateur et comportant une base de données contenant les caractéristiques intrinsèques d'une optique et un programme de détermination, à partir de la base de données et de mesures effectuées sur site alors que l'optique est montée sur une caméra, des caractéristiques extrinsèques et de la fonction de transfert 2D complète entre la scène vue par la caméra et l'image restituée.

Suivant un autre aspect de l'invention, il est proposé un procédé de calibrage permettant de déterminer une table de correspondance entre d'une part au moins des signaux de sortie de capteurs de zoom Z et de mise au point F placés sur un objectif de caméra et constitués par des codeurs numériques et d'autre part des valeurs réelles de focale et de déformations géométriques de l'objectif sur laquelle est montée l'optique, comprenant :
(a) une étape, effectuée une fois pour toutes, de détermination de caractéristiques intrinsèques de l'objectif, effectuée après montage de l'objectif sur une caméra , au cours de laquelle :
   - on effectue plusieurs prises de vue avec des orientations différentes de la caméra en azimut (ou panoramique) et en élévation (ou inclinaison) et des valeurs différentes du zoom et de la mise au point (cette dernière influant sur la distance focale),
   - à chaque prise de vue on relève les signaux de sortie des codeurs et la position dans l'image d'au moins 2 points, l'un proche, l'autre lointain, dans la scène observée selon la prises de vue, et
   - à partir de comparaisons entre les valeurs des signaux et la position des points dans l'image fournie par la caméra on détermine une table de calibrage intrinsèque, et
(b) une étape sur site après montage de l'objectif sur une caméra destinée à une exploitation, au cours de laquelle :
   - on précise les conditions opérationnelles (par exemple : standard PAL, NTSC..., taille d'image 4/3,16/9, Haute Définition, ... ; position de la caméra sur la tête de caméra après équilibrage, etc.).
   - on répète un nombre réduit des opérations effectuées en (a) uniquement dans la mesure nécessaire au recalage d'origines et à la détermination de paramètres dont l'aspect ratio du pixel.

Le point proche observé au cours de l'étape (a) pourra être matérialisé par une source ponctuelle telle qu'une diode électroluminescente ou une diode laser placée à une distance légèrement supérieure à la distance minimale de mise au point. Le point lointain doit simuler une vision à l'infini et de préférence au moins 100m.

En général toutes les mesures de l'étape (a) seront effectuées avant les calculs qui sont ensuite réalisés de façon globale sur site ou à distance. Ces mesures peuvent pa exemple être effectuées suivant un programme bien défini en plusieurs étapes, chaque étape étant avec le même réglage de zoom, avec plusieurs degrés de mise au point différents.

L'indépendance des caractéristiques de zoom et de mise au point permet ensuite une représentation de l'objectif par un modèle mathématique sous forme de deux tables représentatives de deux familles de fonction à une seule variable d'entrée alors qu'une approche sans séparation aurait requis une table à double entrée qui rend l'interpolation difficile. En d'autres termes, on représente l'objectif par un modèle mathématique utilisant uniquement des fonctions à une seule variable d'entrée.

Un avantage supplémentaire du procédé est qu'il permet la calibration à distance donc de ne pas divulguer le logiciel de calibration ce qui serait impossible sans la séparation des deux dernières étapes de la phase (a). Un serveur d'application peut être prévu sur le protocole SMTP, sous réserve de connecter la machine de calibration à l'internet de façon temporaire. A la faveur d'une connexion Internet les données obtenues par les « snaps » mentionnés plus loin sont adressées à un serveur qui répond en envoyant un fichier de calibration éventuellement crypté.

La caméra portant l'objectif peut être complétée par au moins un capteur à gyromètre qui complète la mesure angulaire fournie par les capteurs de la tête de caméra lorsque celle-ci est soumise à des vibrations (par exemple sur un stade).Ce gyromètre est destiné à une mesure en inclinaison, pour laquelle le balourd induit des erreurs de mesure. En effet la caméra est équilibrée de façon statique mais non dynamique : sans mouvement elle est en équilibre, mais sous l'effet d'une excitation (majoritaire selon l'axe vertical si la structure est bien construite) la translation induit une rotation en « tilt ». Sur une structure aux modes propres plus inquiétants tel qu'une translation horizontale, on peut envisager un second capteur à gyromètre en panoramique ou « pan ».

Les données provenant des capteurs représentant l'état de la caméra instrumentée peuvent être utilisées directement de façon classique ou être converties en un signal audio, ce qui permet d'utiliser l'environnement audio-visuel habituel pour le transport et/ou l'enregistrement.

Les caractéristiques ci-dessus, ainsi que d'autres, apparaîtront mieux à la lecture de la description qui suit d'un mode particulier de réalisation, donné à titre d'exemple non limitatif. La description se réfère aux dessins qui l'accompagnent, dans lesquels :
- La figure 1 est un schéma destiné à illustrer le rôle des différents capteurs portés par l'objectif et la tête d'une caméra appareillée destinée à la substitution d'une zone cible:

- La figure 2 montre un montage courant de la tête d'une caméra, avec mouvement en inclinaison ou « tilt » s'ajoutant à un mouvement panoramique (s'opposant à un montage dit équatorial);
- Les figures 3A et 3B montrent les types de déformation qui interviennent dans la formation d'une image;
- La figure 4 montre les emplacements où est amené dans l'image un même repère de la scène en vue du calibrage intrinsèque, puis du calibrage extrinsèque ;
- La figure 5 est un synoptique simplifié montrant une mise en oeuvre possible du modèle mathématique .

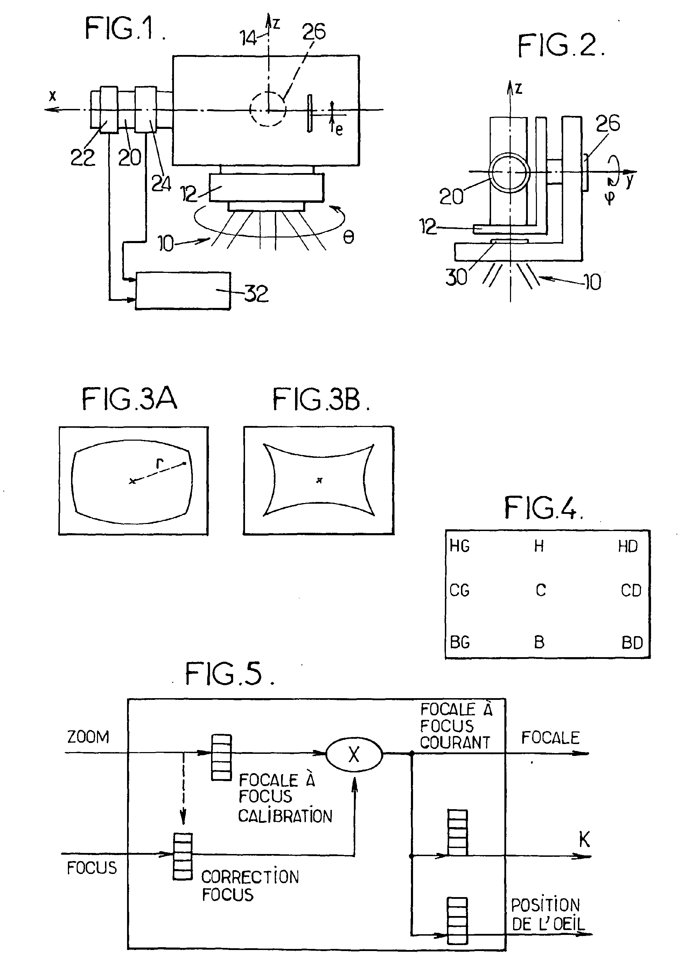

La caméra schématisée en figure 1 comporte un pied 10 sur lequel un support de tête 12 peut tourner autour d'un axe de panoramique 14. La tête 16 peut tourner sur le support 12 autour d'un axe d'élévation18. Sur la tête de caméra est monté un objectif 20 portant en général une bague de mise au point 22 et une bague de zoom 24. Ces deux bagues sont munies de codeurs angulaires absolus à résolution élevée. L'angle d'élévation φ sur le support est fourni par un capteur 26. L'angle autour d'un axe de panoramique θ est fourni par un capteur 30. Tous ces capteurs sont reliés à une électronique d'acquisition 32 qui convertit les données des capteurs sous forme de signal série (RS232, RS422) ou de modulation audio.

Pour qu'une incrustation puisse être effectuée de façon précise, il est nécessaire de déterminer, à partir des signaux des capteurs, où se trouve exactement, dans l'image, la zone à remplacer qui est immuable dans la scène, et cela quel que soient le degré de zoom, la mise au point et l'orientation de la caméra. Or les transformations d'image lors des enchaînements de ces paramètres sont bien loin d'être de simples homothéties et d'être les mêmes pour tous les objectifs d'un même type.

La calibration est un procédé déterministe qui permet de stocker le comportement de l'objectif dans toutes les positions de Zoom et de mise au point (Focus).

On décrira maintenant et successivement :
- la calibration intrinsèque : elle génère un fichier contenant les caractéristiques géométriques intrinsèques de l'objectif ; l'objectif est alors répertorié dans une base de donnée d'objectifs calibrés ; la calibration est a faire pour chaque objectif, même pour un même modèle dans une même marque mais une fois pour toutes.
- la calibration extrinsèque ou Lens Camera Setting (en abrégé LCS) : elle prend en charge les contraintes d'exploitation liées aux montage et démontage de l'objectif sur la caméra qui produisent des différences d'alignement sur une même caméra et sur des caméras différentes (format d'image). Le LCS est refait à chaque remontage de l'objectif et de la caméra, même si le même objectif est monté sur la même caméra (tolérances mécaniques).

Une fois toutes ces opérations effectuées, le comportement de la caméra utilisée pour les prises de vue aura été mémorisé pour toute une série de valeurs capteur du zoom Z et de la mise au point F, cela permettant une interpolation.

### Le calibrage intrinsèque, transposable d'une caméra à une autre

L'objectif est modélisé en déterminant plusieurs paramètres variables en fonction de la focale f au moins :
- la distance focale absolue pour deux valeurs de la distance connue du point visé, l'une à l'infini P1,l'autre P2 à proximité (entre 5 et 15m suivant le type d'objectif);
- le coefficient K de déformation géométrique dans le sens radial ;
- la correction de focale liée au Focus
et des paramètres globaux indépendants du zoom :
- la position de l'oeil ;
- le rapport d'aspect (rapport entre hauteur et largeur des pixels de la matrice de sites photosensibles);
- l'inclinaison lors d'une visée à l'horizontale, due au fait que le codeur d'inclinaison ne donne pas une valeur nulle pour une telle visée (lacune actuelle).

La position de l'oeil est le point de l'axe optique tel que si on le fait coïncider avec l'axe vertical de pan, aucune parallaxe n'est visible dans l'image lors d'un panoramique entre un point proche (matérialisé par exemple sur une vitre) et un point à l'infini.

### Initialisation - plan large et plan serré

L'opération commence par l'entrée en mémoire de l'identification de l'objectif
P1 et P2 étant les points choisis ,
F1 et F2 étant les valeurs de mise au point en plein zoom Zn (grandissement maximum ou zoom in) choisies pour P1 et P2,
F3 étant une valeur de mise au point choisie arbitrairement entre 1,1 F2 et la valeur de F à la distance minimale de mise au point, Z1, ..., Zi,....,Zn étant les valeurs de zoom de référence,
H, B,G,D,C,HG, BD,HD, BG étant les 9 positions que l'on fait prendre à un même point dans l'image en manipulant la caméra (figure 4),
l'opérateur effectue tout d'abord six opérations d'initialisation. Au cours de chacune d'elles, qu'on peut qualifier de « snap », il déplace la caméra pour faire venir le point observé à l'une des 9 positions ci-dessus et clique sur lui. Chaque fois les valeurs fournies par les codeurs et la distance entre le point dans la scène et la caméra sont mémorisés :
P1, F1, Zn, C
P1, F1, Z1, C
P1, F1, Z1, G
P1, F1, Z1, D
P2, F2, Zn, C
P1, F1, Z1, B

Aucun calcul n'est effectué à l'issue de cette phase ; l'opérateur passe ensuite à des mesures en plan large (zoom out) Z1 et en plan serré (zoom in) Zn.

### Plans large et serré, correspondant à des focales différentes, avec les mises au point F1,F2 et F3

L'opérateur effectue 5 « snaps » pour définir le plan large :
P1, F1, Z1, H
P1, F1, Z1, HG
P2, F1, Z1, H
P2, F2, Z1, H
P2, F3, Z1, H

Puis 5 « snaps » en plan serré :
P1, F1, Zn, H
P1, F1, Zn, HG
P2, F1, Zn, H
P2, F2, Zn, H
P2, F3, Zn, H

A la fin de cette phase, le logiciel lance une première série de calculs en affectant initialement des valeurs par défaut aux paramètres globaux :

```
FAIRE
{DETERMINER PARAMETRES ZOOM Z1 A PARTIR DES 5 SNAPS Z1
 DETERMINER PARAMETRES ZOOM Zn A PARTIR DES 5 SNAPS Zn
 DETERMINER PARAMETRES GLOBAUX A PARTIR DES 6 SNAPS D
 INITIALISATION}
JUSQU'A CONVERGENCE
```

S'il n'y a pas convergence, le logiciel est prévu pour demander à l'opérateur de vérifier les « snaps » ou de les recommencer.

Les résultats de tous ces « snaps » et des suivants sont conservés en mémoire du calculateur pour permettre à l'opérateur de revenir sur la position d'un point s'ilm le souhaite.

Un « snap » peut par exemple provoquer l'exploration d'une fenêtre de 200 x 150 pixels dans l'image entière, soit environ 60k.

### Zooms intermédiaires

Les mesures sont effectuées pour plusieurs degrés intermédiaires de zoom Z2, Z3, .... , Zn-1. Pour chaque zoom de référence l'opérateur effectue encore 5 « snaps » :
P1, F1, Zi, H
P1, F1, Zi, HG
P2, F1, Zi, H
P2, F2, Zi, H
P2, F3, Zi, H

A la fin de cette étape le logiciel calcule les paramètres liés au zoom pour chacune des valeurs Zi. Le logiciel peut être prévu pour demander à l'opérateur de vérifier les « snaps » ou de les recommencer en cas de non convergence.

Le paramètre le plus important est la focale, variable en fonction du Zoom et, à un moindre degré, de la mise au point. La focale permet la conversion entre des points de l'image et des coordonnées dans l'espace 3D.

Chaque étape du calcul permet de déterminer un paramètre de l'objectif grâce à un déroulement où :
- seuls les paramètres antérieurs sont nécessaires
- les paramètres encore inconnus sont invariants.

Ces étapes sont successivement :
1. La détermination du centre optique de coordonnées (Cx, Cy) sur la matrice, due au décalage e ;
2. Le rapport d'aspect= Ypixel / Xpixel de la caméra de référence ;
3. La distance focale absolue , fonction du degré de zoom à mise au point constante ;
4. La correction de mise au point ou « focus » , de la forme 1+ε(Focus) avec ε (Focus) = A*Focus²+B*Focus+C ;
5. Le coefficient K de distorsion radiale intervenant dans une formule de la forme r'= r+ Kr³

Où r est la distance au centre optique et K est une fonction uniquement de la focale et est positif pour une déformation en barillet et négatif pour une déformation en coussinet.

On différencie :
- les paramètres constants
   - Position du centre optique
   - Rapport d'aspect ou « Pixel ratio »
   - Echelle focale absolue
- les paramètres fonction du Zoom
   - Focale
   - K
   - Correction de Focus
   - Position de l'oeil

Dans l'ordre on détermine :
- les paramètres fixes
- les courbes :
   - Focale (Zoom) à Focus constant
   - K (Focale) à Focus constant
   - Position de l'oeil (Focale) à Focus constant
   - Correction Focus (Focale)

Les expressions analytiques trouvées expérimentalement sont logarithmiques par morceaux pour le Zoom sur chaque intervalle entre deux valeurs Zi et polynomiales de degré 2 pour la correction de Focus . Elles sont mémorisées sous forme de valeurs particulières des paramètres d'un modèle mathématique.

A l'issue du calibrage intrinsèque, les résultats des traitements effectués localement ou sur le serveur distant sont mémorisés sous forme de fichier en mémoire morte ou flash, ou disque dur.

On dispose alors d'un fichier qui contient des paramètres de calibration se rapprochant au mieux des caractéristiques réelles de l'objectif.

### Calibrage extrinsèque

Lors du montage sur une caméra autre que celle, de référence, sur laquelle ont été déterminées les caractéristiques intrinsèques, le centre optique change légèrement, ce qui induit des erreurs. L'équilibrage de la caméra déplace la « position de l'oeil » et induit un effet de parallaxe (la rotation de la caméra induit une légère translation de signe inconnu) d'autant plus gênant que l'objet est proche. Enfin le capteur d'image peut avoir des géométries et des tailles différentes selon le standard d'image.

Le calibrage extrinsèque, qu'on peut qualifier de « lens camera setting » ou LCS est un ajustement des données de calibration. Il ne recalcule que les paramètres constants liés à l'installation de la caméra , comportent des paramètres ayant deux sources :
- couplage objectif - caméra :
   - Centre optique (Cx, Cy)
   - Pixel ratio (Ypixel / Xpixel = aspect ratio des pixels)
   - Ajustement de l'échelle des focales (focale absolue)
   - Ajustement de l'offet de la semelle (base de la position de l'oeil)
   - Ajustement échelle focale absolue
- éventuellement couplage caméra - tête (avec de multiples origines pour chaque paramètre)
   - roulis ou « roll » : l'axe horizontal de la matrice fait un angle avec l'axe d'élévation ajustement du décalage de la semelle de la caméra sur le pied.
   - « Tilt zéro » : I valeur du codeur d'inclinaison lorsque l'axe optique est rigoureusement orthogonal à l'axe de panoramique ou pan.

Cette liste est non limitative, d'autres paramètres pourront être intégrés :
- Pan zéro (axe optique non rigoureusement parrallèle à l'axe de tiit)
- Focus zéro (butée non fiable sur certain objectifs)
- Zoom zéro (butée non fiable sur certain objectifs)

Pour fournir, au calculateur associé à la caméra et à un système d'insertion ultérieure d'un modèle virtuel à la place d'une cible les éléments qui lui permettront d'indiquer l'emplacement exact de l'image où doit se faire l'insertion, l'opérateur sur site répète les opération 1 et 2 ci-dessus destinées à repérer le centre optique et le rapport d'aspect ainsi qu'à déterminer la focale absolue. Le calculateur dans lequel est chargé le programme associé à l'objectif recale les paramètres constants fournis par le fichier associé à l'objectif. On arrive ainsi à un modèle mathématique du genre montré en figure 5. En d'autres termes, les indications fournies par les capteurs sont corrigées de façon à permettre de déterminer la position exacte, dans l'image telle qu'elle est restituée, de la cible et de permettre son remplacement par le modèle après mise à l'échelle correcte de celui-ci (et éventuellement déformation due à la perspective ou même aux aberrations géométriques de l'objectif), ou l'adjonction du modèle sur la cible, sous forme semi-transparente, après mise à l'échelle.

## Revendications

1. Procédé de calibration d'un ensemble optique - caméra choisi, dans lequel :
(a) on effectue, une fois pour toutes, un calibrage transportable d'une caméra à une autre fournissant des caractéristiques intrinsèques de l'optique et on constitue un fichier informatique contenant ces caractéristiques, et
(b) sur site, on corrige un décalage dans le fichier informatique par visée de points caractéristiques d'une scène à observer avec ledit ensemble optique - caméra choisi, pour définir une fonction de transfert entre :
- la scène observée par ledit ensemble optique - caméra choisi,
- et l'image restituée,
cette fonction de transfert faisant intervenir :
- des signaux provenant de capteurs d'orientation de la caméra et de capteurs de l'optique,
- et le fichier informatique ainsi corrigé.

2. Procédé selon la revendication 1, dans lequel, à l'étape (a), on constitue ledit fichier sous la forme d'une table de correspondance entre :
- d'une part au moins des signaux de sortie de capteurs de zoom Z et de mise au point F placés sur l'objectif et constitués par des codeurs numériques.
- et d'autre part, des valeurs réelles de focale et de déformations géométriques.

3. Procédé selon la revendication 2, dans lequel, à l'étape (a) :
- on effectue plusieurs prises de vue avec des orientations différentes de la caméra en azimut (ou panoramique) et en élévation (ou inclinaison) et des valeurs différentes du zoom et de la mise au point, cette dernière influant sur la distance focale,
- à chaque prise de vue on relève les signaux de sortie des codeurs et la position dans l'image d'au moins deux points, l'un proche, l'autre lointain, dans la scène observée selon la prise de vue, et
- à partir de comparaisons entre les valeurs des signaux et la position des points dans l'image fournie par la caméra on détermine ladite table de calibrage.

4. Procédé selon l'une des revendications précédentes, dans lequel, à l'étape (b) on tient compte d'un défaut d'alignement entre l'optique et la caméra et on effectue un recalage d'origines pour corriger ledit fichier informatique.

5. Procédé selon la revendication 4, dans lequel, à l'étape (b) :
- on précise des conditions opérationnelles, et
- on répète un nombre réduit des opérations effectuées à l'étape (a) uniquement dans la mesure nécessaire audit recalage d'origines.

6. Procédé selon l'une des revendications précédentes, dans lequel un point proche observé au cours de l'étape (a) est une source ponctuelle telle qu'une diode laser placée à une distance légèrement supérieure à la distance minimale de mise au point.

7. Procédé selon l'une des revendications précédentes, dans lequel toutes les mesures de l'étape (a) sont effectuées avant les calculs qui sont ensuite réalisés de façon globale.

8. Procédé selon l'une quelconque des revendications 2 à 7, dans lequel on représente l'objectif par un modèle mathématique utilisant uniquement des fonctions à une seule variable d'entrée.

9. Procédé selon l'une quelconque des revendications 2 à 8, dans lequel l'ensemble des données capteur représentant l'état de la caméra instrumentée est converti en un signal audio et dans lequel on utilise l'environnement audio-visuel pour le transport et l'enregistrement.

10. Procédé selon l'une des revendications précédentes, dans lequel la caméra utilisée pour la mise en oeuvre de l'étape (a) est différente de la caméra dudit ensemble optique - caméra choisi.

## Claims

1. Method of calibrating a chosen set of lens system-camera, wherein:
(a) a calibration, transposable from a camera to another and giving intrinsic characteristics of the lens system is performed, once for all, and a computer file containing those characteristics is provided; and
(b) on site, a shift in the computer file is corrected by tallying characteristic points of a scene to be observed with said chosen set of lens-system camera, in order to define a transfer function between:
- the scene to be observed by said chosen set of lens system-camera,
- and the returned image,
this transfer function involving:
- signals coming from camera orientation sensors and from lens system sensors,
- and the computer file as corrected.

2. Method according to claim 1, wherein, in step (a), said file is provided in the shape of a calibration table between:
- on the one hand, at least two output signals coming from zoom Z and focus F sensors, placed on the lens and constituted of digital coders,
- and, on the other hand, real values of focal lens and geometrical deformations.

3. Method according to Claim 2, wherein, at step (a):
- a plurality of shots are taken with the camera in different azimuth (pan) and elevation (tilt) orientations and different zoom and focus values, the latter having an influence on the focal lens,
- for each shot, output signals from the encoders and the positions in the image of at least two points, including a nearer point and a farther point, in the observed scene in the shot, are stored, and
- on the basis of comparisons between the signal values and the positions of the points in the image provided by the camera, said calibration table is drawn up.

4. Method according to any of the preceding claims, wherein, in step (b), an alignment mismatch between the lens system and the camera is taken into account and a resetting of origins is performed for correcting said computer file.

5. Method according to claim 4, wherein, in step (b):
- operating conditions are specified, and
- only some of the operations performed in step (a) are repeated solely insofar as they are necessary for resetting origins.

6. Method according to any of the preceding claims, wherein a nearer point observed during step (a) is a point source such as a laser diode placed at a distance that is slightly greater than a shortest distance for which focusing is possible.

7. Method according to any of the preceding claims, wherein all the measurements of step (a) are performed prior to performing the computations which are later performed altogether.

8. Method according to any of the claims 2 to 7, wherein the lens is represented by a mathematical model making use solely of functions having a single input variable.

9. Method according to any of the claims 2 to 8, wherein the whole sensor data representing a condition of the instrumented camera is converted into an audio signal, and wherein the audio-video environment is used for transporting and recording the data.

10. Method according to any of the preceding claims, wherein the camera used for the implementation of step (a) is different from the camera of said chosen set of lens system-camera.

## Patentansprüche

1. Kalibrierungsverfahren eines ausgewählten Optik-Kamerasatzes, wobei:
a) ein für alle Mal eine von einer Kamera zur anderen übertragbare Kalibrierung vorgenommen wird, die immanente Optikmerkmale liefert und eine Datei erstellt, die diese Merkmale beinhaltet, und
b) vor Ort die Berichtigung einer Abweichung in der Datei durch Anpeilen charakteristischer Punkte eines mit diesem ausgewählten Optik-Kamerasatz zu beobachtenden Schauplatzes durchgeführt wird, um eine Übertragungsfunktion zu definieren zwischen:
- dem mit diesem ausgewählten Optik-Kamerasatz beobachteten Schauplatz
- und dem wiedergegebenen Bild
wobei diese Übertragungsfunktion einbezieht:
- Signale, die von Richtungssonden der Kamera und von Optiksonden stammen,
- und die somit berichtigte Datei.

2. Verfahren nach Anspruch 1, wobei in Schritt (a) die Datei in Form einer Entsprechungstabelle erstellt wird zwischen:
- einerseits zumindest Ausgangssignalen der Zoom-Sonden Z und der Einstellung F, die auf dem Objektiv angeordnet sind und von digitalen Kodierern gebildet werden,
- und andererseits den tatsächlichen geometrischen Brenn- und Verformungswerten.

3. Verfahren nach Anspruch 2, wobei in Schritt (a)
- mehrere Aufnahmen mit unterschiedlichen Orientierungen der Kamera im Richtungswinkel (oder Panorama) und im Erhebungswinkel (oder Neigungswinkel) und unterschiedlichen Zoom- und Einstellungswerten angefertigt werden, wobei letzterer Wert einen Einfluss auf die Brennweite hat,
- bei jeder Aufnahme die Ausgangssignale der Kodierer und die Position von zumindest zwei Punkten - einem Nah- und einem Fernpunkt - im Bild auf Ebene des in Abhängigkeit von der Aufnahme beobachteten Schauplatzes erfasst werden, und
- besagte Kalibriertabelle ausgehend von Vergleichen zwischen den Signalwerten und der Position der Punkte im von der Kamera gelieferten Bild bestimmt wird.

4. Verfahren nach einem der vorstehenden Ansprüche, bei dem in Schritt (b) ein Ausrichtungsfehler zwischen der Optik und der Kamera berücksichtigt und eine Nachstellung der Ausgangswerte vorgenommen wird, um die besagte Datei zu berichtigen.

5. Verfahren nach Anspruch 4, wobei in Schritt (b):
- die operativen Bedingungen präzisiert werden, und
- eine beschränkte Anzahl der in Schritt (a) durchgeführten Vorgänge nur zum Zweck der notwendigen Nachstellung der Ausgangswerte wiederholt wird.

6. Verfahren nach einem der vorstehenden Ansprüche, wobei ein Nahpunkt, der im Verlauf von Schritt (a) beobachtet wurde, eine punktuelle Quelle wie eine Laserdiode ist, in einem Abstand angeordnet, der etwas größer als der Mindesteinstellungsabstand ist.

7. Verfahren nach einem der vorstehenden Ansprüche, wobei alle Messungen von Schritt (a) vor den Berechnungen vorgenommen werden, die danach global durchgeführt werden.

8. Verfahren nach einem der Ansprüche 2 bis 7, wobei das Objektiv durch ein mathematisches Modell dargestellt wird, das einzig auf Funktionen mit einer einzigen Eingabevariablen zurückgreift.

9. Verfahren nach einem der Ansprüche 2 bis 8, wobei die Gesamtheit der Sondendaten, die den Zustand der instrumentierten Kamera darstellen, in ein Tonsignal umgewandelt wird, und wobei die audiovisuelle Umgebung für die Übertragung und die Speicherung genutzt wird.

10. Verfahren nach einem der vorstehenden Ansprüche, wobei sich die für die Umsetzung von Schritt (a) genutzte Kamera von der Kamera des ausgewählten Optik-Kamerasatzes unterscheidet.
